# DEMANDE DE BREVET EUROPEEN

(11) **EP 3 587 852 A1**
(43) Date de publication de la demande: **01.01.2020**
(21) Numéro de dépôt: 19181929.1
(22) Date de dépôt: 24.06.2019
(51) Int. Cl.: F16F 7/02, F16F 7/04, F41C 23/06, F41C 23/20, F41A 25/06

(54) **ORGANE AMORTISSEUR ET AMORTISSEUR D ÉNERGIE DE RECUL POUR ARMES À FEU PERSONNELLES, AINSI QU'ARMES À FEU PERSONNELLES COMPORTANT UN ORGANE AMORTISSEUR**

(30) Priorité: 27.06.2018 CH 8082018
(71) Demandeur: Ancienne Maison Sandoz Fils & Cie S.A., 2300 La Chaux-de-Fonds (CH)
(72) Inventeur: Reyna, Alain, 2300 La Chaux-de-Fonds (CH)
(74) Mandataire: BOVARD AG

(57) **Abrégé**

La présente invention se rapporte à un organe amortisseur d'énergie de recul (20) pour arme à feu personnelle. L'organe amortisseur d'énergie de recul (20) selon la présente invention comporte un frein à disques (12) et il est caractérisé en ce que l'axe de rotation du frein à disques (12) est essentiellement parallèle à la direction de la force de recul dont l'énergie doit être dissipée. La présente invention se rapport également à un amortisseur d'énergie de recul (1) ainsi qu'à une arme à feu personnelle comportant un organe amortissement de l'énergie de recul (20) selon la présente invention.

## Description

### Domaine technique de l'invention

La présente invention se rapporte au domaine des armes à feu et plus particulièrement aux armes à feu personnelles. La présente invention se rapporte en particulier au domaine des dispositifs d'amortissement de l'énergie de recul d'une arme à feu personnelle. Elle se rapporte plus précisément à un organe amortisseur d'énergie de recul pour armes à feu personnelles basé sur un frein à disques. La présente invention concerne également un amortisseur pour armes à feu personnelles ainsi qu'une arme à feu personnelle comprenant un organe amortisseur d'énergie de recul selon la présente invention.

### État de la technique

Les utilisateurs d'armes à feu personnelles souffrent fréquemment des chocs provoqués par la force de recul de l'arme qui s'exercent le plus souvent sur l'épaule du tireur. Ceci est particulièrement vrai pour les tireurs sportifs, tels que les tireurs de balltrap, qui pour atteindre un haut niveau de performance doivent tirer plusieurs milliers de cartouches par année.

Afin d'atténuer l'énergie de recul, plusieurs types d'amortisseurs pour armes à feu ont été développés. Ces amortisseurs de recul connus emploient comme organe amortisseur, le plus souvent, des ressorts ou des systèmes pneumatiques ou hydrauliques. On utilise parfois également des pièces en matériau élastique en lieu et place des ressorts. Ces organes amortisseurs de recul ont tous le désavantage de ne pouvoir atténuer qu'une faible partie de l'énergie. L'effet atténuateur est donc peu satisfaisant et n'empêche pas les douleurs à l'épaule du tireur provoqués par des chocs non suffisamment atténués.

Il existe par conséquent un besoin pour un organe amortisseur d'énergie de recul pouvant être utilisé dans des amortisseurs de tir pour armes à feu personnelles qui puisse permettre d'atténuer une grande partie de l'énergie de recul et de protéger ainsi la partie du corps du tireur sur laquelle l'amortisseur de tir vient prendre appui lors du tir.

### Résumé de l'invention

Un but de la présente invention est donc de proposer un organe amortisseur d'énergie de recul, un amortisseur de recul pour armes à feu personnelles, ainsi qu'une arme à feu personnelle permettant de surmonter les limitations mentionnées préalablement.

Selon l'invention, ces buts sont atteints grâce aux objets des trois revendications indépendantes. Les aspects plus spécifiques de la présente invention sont décrits dans les revendications dépendantes ainsi que dans la description.

De manière plus spécifique, un but de l'invention est atteint grâce à un organe amortisseur d'énergie de recul, par exemple pour amortisseurs pour armes à feu personnelles comprenant un frein à disques, caractérisé en ce que l'axe de rotation du frein à disques est essentiellement parallèle à la direction de la force de recul dont l'énergie doit être dissipée.

Grâce à un organe amortisseur d'énergie de recul selon la présente invention, l'énergie de recul est absorbée et transformée en énergie thermique par l'organe amortisseur et plus précisément par le frein à disques. Un tel organe amortisseur est plus efficace qu'un un organe amortisseur de l'art antérieur, dans lequel l'énergie de recul n'est amortie que par un système de ressorts. En effet, un organe amortisseur dans lequel l'énergie de recul est emmagasinée de manière transitoire dans des ressorts a pour grand désavantage qu'une grande partie de l'énergie emmagasinée dans les ressorts est restituée brusquement au tireur. Par conséquent, l'effet protecteur du corps du tireur n'est que très partiel. De plus, ce genre d'organe amortisseur ne permet pas une précision de tir suffisante pour le tir sportif. Le fait que l'axe de rotation du frein à disques de l'organe amortisseur selon la présente invention soit essentiellement parallèle à la force de recul dont l'énergie doit être dissipée, permet d'avoir un mécanisme d'amortissement d'énergie de recul particulièrement simple qui peut être facilement intégré dans des amortisseurs de tir tout en garantissant un degré d'amortissement important.

Dans un premier mode de réalisation préféré de la présente invention, le premier disque de frein est pivotable autour de l'axe de rotation du frein à disque et le deuxième disque de frein est fixe. Ceci permet d'avoir un mécanisme de frein à disques particulièrement simple.

Dans un mode de réalisation suivant, l'organe amortisseur d'énergie de recul comporte un mécanisme d'ajustage du couple de freinage. Grâce à ce mécanisme le taux de conversion de l'énergie mécanique de recul en énergie thermique et donc le degré d'amortissement peut être ajusté. Le tireur peut ainsi ajuster le degré d'amortissement qui lui convient le mieux.

Dans un mode de réalisation suivant, l'organe amortisseur d'énergie de recul peut être neutralisé. Ceci est avantageux car le tireur peut enclencher ou bloquer l'organe amortisseur et décider suivant la situation d'avoir un amortissement de l'énergie de recul ou non. Avec un tel mécanisme le tireur n'a donc pas besoin de retirer l'organe amortisseur pour avoir à nouveau une arme à feu sans amortissement ce qui peut dans certaines situations avoir des avantages quant à la précision du tir.

Dans un autre mode de réalisation, le mécanisme d'ajustage du couple de freinage comprend un ressort de frein qui tend à appuyer le deuxième disque de frein contre le premier disque de frein. Grâce à un tel ressort de frein, il est facile d'ajuster le couple de freinage en le comprimant plus ou moins ce qui a pour conséquence d'appuyer le deuxième disque de frein avec une plus ou moins grande pression contre le premier disque de frein. Par la même, la résistance de la rotation du premier disque de frein, et donc le couple de freinage, peut être ajustée.

Dans un autre mode de réalisation, le mécanisme d'ajustage du couple de freinage comporte aussi une vis de réglage qui est configurée pour permettre d'ajuster la compression du ressort de frein. Grâce la vis de réglage, il est facile d'ajuster précisément la compression du ressort de frein et ainsi le couple de freinage de l'amortisseur.

Dans un autre mode de réalisation, l'organe amortisseur d'énergie de recul comprend une vis à filetage hélicoïdal qui est solidaire avec le premier disque de frein. Grâce à la vis à filetage hélicoïdale il est possible de facilement transformer le déplacement de l'arme à feu le long de la direction de la force de recul dont l'énergie doit être dissipée en une rotation du premier disque de frein ce qui permet finalement de transformer l'énergie mécanique de recul en énergie thermique.

Dans un autre mode de réalisation, l'organe amortisseur d'énergie de recul est caractérisé en ce qu'il comprend une roue libre et un boulon arrangé sur la vis à filetage hélicoïdal, la roue libre étant configurée pour entrainer en rotation la vis et donc le premier disque de frein lors de la dissipation de l'énergie de recul par le frein à disques de l'amortisseur. Par le biais de la roue libre, il est possible d'avoir un mécanisme qui peut transmettre efficacement l'énergie de recul d'une l'arme à feu vers l'organe amortisseur tout en permettant que l'amortisseur puisse retrouver la configuration qu'il avait avant le tir. La roue libre peut être choisie pour que celle-ci puisse entrainer en rotation la vis à filetage hélicoïdale dans un sens ou dans l'autre. Ainsi, l'organe amortisseur d'énergie de recul selon la présente invention, peut être utilisé soit pour un amortissement direct de l'énergie de recul ou soit pour un amortissement indirect dans lequel l'énergie est dissipée par le disque à frein lors du retour de l'arme à feu.

Dans un autre mode de réalisation, l'organe amortisseur d'énergie de recul comprend un ressort de rappel qui est configuré pour tendre à ramener les éléments de l'organe amortisseur d'énergie de recul dans leur position initiale avant le tir. Grâce au ressort de rappel, l'organe amortisseur d'énergie de recul reprend après le tir la configuration qu'il avait avant le tir de manière automatique.

Dans un autre mode de réalisation, les disques de frein sont placés dans un cylindre qui peut s'insérer par exemple dans la crosse de l'arme à feu. Ainsi, les disques de frein sont protégés. Plus particulièrement, les disques de frein sont protégées contre les contaminations et poussières qui pourraient empêcher la rotation des disques de frein les uns par rapport aux autres ce qui voudrait empêcher l'amortissement d'énergie de recul et pourrait éventuellement entrainer des dommages à l'organe amortisseur.

Dans un autre mode de réalisation, les disques de frein sont fabriqués en acier trempé ou en carbure de tungstène. Ces matériaux sont particulièrement bien appropriés car ils sont très durs et l'usure des disques de frein peut être réduite à un minimum. Ainsi, l'organe amortisseur d'énergie de recul peut être utilisé pour un grand nombre de tirs avant qu'un échange des disques de frein doive être mis en oeuvre.

Les buts de la présente invention sont également réalisés par un amortisseur d'énergie de recul comprenant une première partie mobile et une deuxième partie mobile qui sont configurées pour pouvoir être déplacées en translation l'une par rapport à l'autre selon un axe qui est essentiellement le même que l'axe du canon de l'arme à feu, la première partie mobile étant configurée pour venir en appui sur le corps du tireur et la deuxième partie mobile étant configurée pour être fixée sur la crosse de l'arme à feu, caractérisé en ce l'amortisseur d'énergie de recul comprend un organe amortisseur d'énergie de recul selon la présente invention orienté de façon à ce que l'axe de rotation du frein à disques de l'organe amortisseur soit essentiellement le même que l'axe de translation des première et deuxième parties mobiles. Grâce un tel amortisseur l'énergie de recul peut dissipée de manière optimale tout en garantissant un confort pour le tireur grâce à la présence des deux parties mobiles.

Dans un deuxième mode de réalisation de l'amortisseur d'énergie de recul, l'organe d'amortisseur de recul comprend un ressort de rappel qui est configuré pour tendre à écarter les première et deuxième parties mobiles. Grâce au ressort de rappel les parties mobiles de l'amortisseur d'énergie de recul reprennent automatiquement leur position initiale après le tir.

Les buts de la présente invention sont également réalisés par une arme à feu personnelle qui comporte un organe amortisseur d'énergie de recul selon la présente invention.

### Brève description des dessins

Les particularités et les avantages de la présente invention apparaîtront avec plus de détails dans le cadre de la description qui suit avec un exemple de réalisation donné à titre illustratif et non limitatif en référence aux quatre dessins ci-annexés qui représentent :
- La figure 1 représente une vue en perspective et en coupe d'un organe amortisseur d'énergie de recul et d'un amortisseur d'énergie de recul selon un mode de réalisation préféré dans leur configuration au repos ;
- La figure 2 représente une vue plane et en coupe de l'organe amortisseur d'énergie de recul et de l'amortisseur d'énergie de recul de la figure 1 dans leur configuration au repos ;
- La figure 3 représente une vue en perspective et en coupe de l'organe amortisseur d'énergie de recul et de l'amortisseur d'énergie de recul de la figure 1 dans leur configuration comprimée ; et
- La figure 4 représente une vue plane et en coupe de l'organe amortisseur d'énergie de recul et de l'amortisseur d'énergie de recul de la figure 1 dans leur configuration comprimée.

### Description détaillée

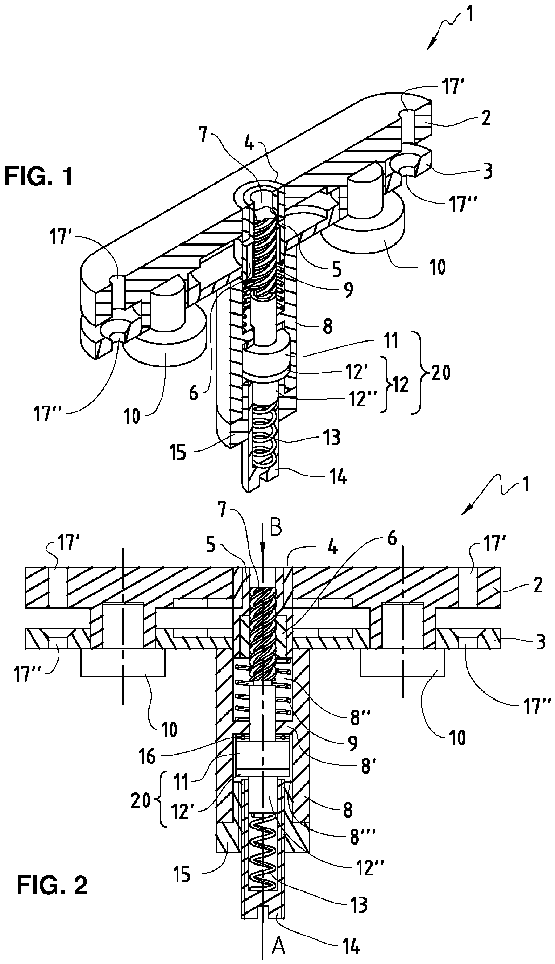

La figure 1 présente une vue en coupe et en perspective d'un amortisseur d'énergie de recul (également appelé amortisseur de tir) 1 pour armes à feu personnelles comprenant un organe amortisseur d'énergie de recul 20 selon un mode de réalisation de la présente invention. Dans cette figure, l'amortisseur 1 et l'organe amortisseur 20 se trouvent dans leur position au repos, c'est-à-dire dans la configuration qu'ils prennent avant ou après le tir. L'amortisseur 1 comprend une première partie mobile 2 en forme de plaque qui se met en contact avec le corps du tireur et une deuxième partie mobile 3, également en forme de plaque, qui est configurée pour se mettre en contact avec la crosse de l'arme à feu (non représentée ici). Les plaques 2 et 3 sont mobiles l'une par rapport à l'autre selon l'axe A qui est de préférence aussi l'axe du canon de l'arme à feu. Les plaques 2 et 3 possèdent les trous 17' et 17" respectivement, ce qui permet de fixer l'amortisseur 1 à la crosse d'un fusil, par exemple par des vis (non illustrées ici).

Comme on peut le voir également dans la figure 2, qui est une vue plane et en coupe de l'amortisseur 1 et de l'organe amortisseur 20 dans leur configuration au repos, l'organe amortisseur 20 comprend une roue libre 4, qui dans ce mode de réalisation est attachée à la plaque 2 de l'amortisseur 1, qui permet ou interdit la rotation d'un élément de liaison 5 de l'organe amortisseur 20. Attaché à cet élément de liaison 5 se trouve un boulon 6 dont le filetage interne correspond au filetage externe d'une vis 7. Dans ce mode de réalisation préféré, la vis 7 est une vis à filetage hélicoïdal ce qui permet de transformer facilement le mouvement de translation des parties mobiles 2 et 3 dans un mouvement de rotation de la vis 7. L'organe amortisseur 20 comprend également un élément 8 en forme de cylindre qui possède une portion interne 8' perpendiculaire à l'axe du cylindre ce qui lui donne en coupe une forme en H. Dans une première cavité 8" du cylindre 8 se trouve un ressort de rappel 9. Le ressort de rappel 9 est dans la configuration au repos de l'organe amortisseur 20 précomprimé entre l'élément de liaison 5 et la portion 8' du cylindre 8.

La roue libre 4 est configurée de telle sorte qu'elle empêche la rotation de l'élément de liaison 5 et par conséquence la rotation du boulon 6 autour de la vis 7 dans le sens de rotation qui voudrait résulter en un déplacement de l'élément de liaison 5 le long de la vis 7 dans la direction de la portion 8' du cylindre 8. Dans une deuxième cavité 8'" du cylindre 8 est prévu, attaché à l'extrémité de la vis 7, un premier disque de frein 11. Entre le disque 11 et la portion 8' du cylindre est prévu un roulement à billes 16 afin que le disque 11 puisse tourner par rapport à la portion 8' sans contrainte.

En face du premier disque de frein 11 est prévu un frein 12 qui possède une partie en forme de disque plat 12', le deuxième disque de frein, et une partie en cylindre plein 12". Les disques de frein 11 et 12' sont les principaux composants de l'organe amortisseur 20. En outre, le frein 12 est chassé en direction du disque 11 sous l'effet d'un ressort de frein 13 qui est comprimé entre la partie 12" du frein 12 et une vis de réglage de frein 14. Dans ce mode de réalisation, le cylindre 8 se termine par un bouchon 15 qui possède un trou en son centre. Ce trou possède un filetage interne correspondant au filetage externe de la vis de réglage 14, ce qui permet en tournant la vis 14 de régler la compression du ressort de frein 13 et par conséquent la pression du frein 12 sur le disque 11 et ainsi le couple de freinage de l'amortisseur 1. La pression du ressort de frein peut être augmentée de telle manière que le disque de frein 11 ne puisse plus tourner. Dans un tel cas, l'organe amortisseur est neutralisé. Dans ce mode de réalisation, le frein 12 est prévu fixe par rapport au cylindre 8.

Lorsqu'une munition est tirée et en réponse au recul de l'arme à feu, le corps du tireur exerce une force de réaction dans la direction de la flèche B sur la roue libre 4 de l'organe amortisseur 20 respectivement sur la plaque 2 de l'amortisseur 1. Comme la roue libre 4 interdit la rotation de l'élément de liaison 5 et donc du boulon 6 dans le sens qui voudrait permettre au boulon 6 d'avancer le long du filetage de la vis 7 en direction de la portion 8' du cylindre 8, c'est la vis 7 elle-même qui commence à tourner en réaction à la force de réaction sur la plaque 2.

La vis 7 entraine en rotation le premier disque de frein 11 qui tourne par rapport au deuxième disque de frein 12'. Grâce à la présence du ressort de frein 13, les disques 11 et 12' sont toujours en contact l'un avec l'autre. Cela a pour conséquence que la rotation du premier disque de frein 11 par rapport au deuxième disque de frein 12' engendre de grandes forces de frottement et donc génère de l'énergie thermique. Ainsi, la majeure partie de l'énergie de recul de l'arme à feu est absorbée et transformée en énergie thermique. Comme mentionné ci-dessus, la pression du disque de frein 12' sur le disque 11 peut être facilement réglée par l'intermédiaire de la vis de réglage 14. Un ressort de frein 13 très comprimé implique un couple de freinage important et donc une grande dissipation de l'énergie de recul, alors qu'un ressort de frein 13 très peu comprimé implique un degré d'amortissement faible.

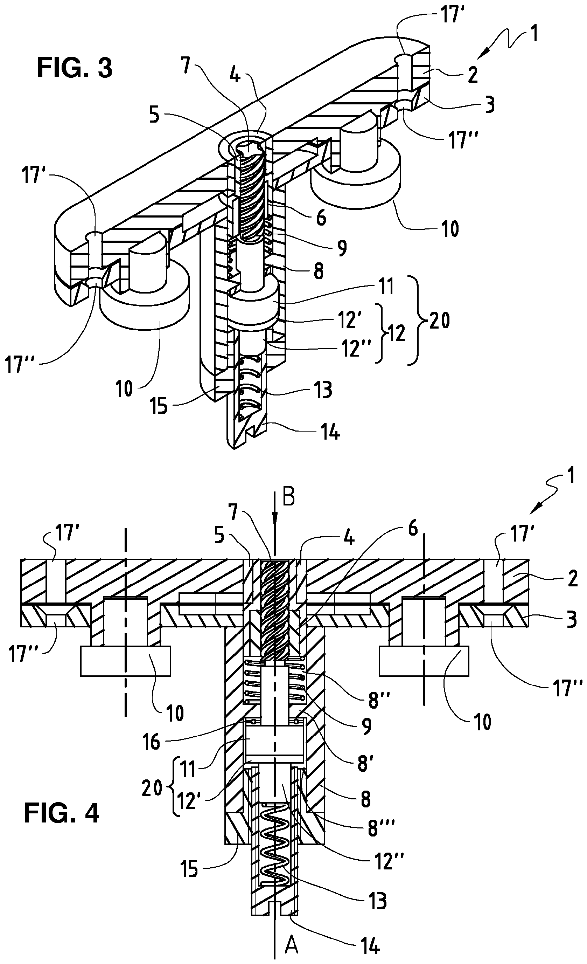

La rotation de la vis 7 dans le boulon 6 a aussi pour effet de tirer la roue libre 4 de l'organe amortisseur 20 et avec elle la première plaque 2 de l'amortisseur 1 en direction de la deuxième plaque 3. Ce mouvement entraine aussi l'élément de liaison 5 et le boulon 6 ce qui résulte en une compression du ressort de rappel 9. Une petite partie de l'énergie de recul est donc emmagasiné dans le ressort de rappel 9. Les figures 3 et 4 illustrent l'organe amortisseur 20 et l'amortisseur 1 dans leur configuration totalement comprimée après que les deux plaques 2 et 3 soient venues en contact en réaction à la pression du corps du tireur sur la plaque 2 dans la direction B.

La rotation de l'élément de liaison 5 et donc du boulon 6 dans le sens qui permet à ce dernier de se déplacer le long du filetage de la vis 7 dans la direction opposée à celle de la portion 8' du cylindre 8 n'est pas interdite par la roue libre 4. Ainsi, après que la pression du corps du tireur sur la plaque 2 et sur la roue libre 4 se soit terminée, c'est-à-dire après le tir, l'énergie emmagasinée dans le ressort de rappel 9 est restituée au boulon 6 qui tourne autour de la vis 7 et qui entraine avec lui l'élément de liaison 5. Le déplacement de l'élément de liaison 5 le long de la vis 7 se traduit en un déplacement de la première plaque 2. Ce déplacement se poursuit jusqu'à ce que les bornes 10 de la plaque 2 entrent en contact avec la deuxième plaque 3 et que l'amortisseur 1 et l'organe amortisseur 20 se retrouvent à nouveau dans leur configuration au repos illustrée dans les figures 1 et 2.

Le mode de réalisation de l'organe amortisseur 20 et de l'amortisseur 1 présenté dans les figures 1 à 4 peut également fonctionner en sens « inverse » afin de dissiper l'énergie de recul de l'arme à feu non pas lors du tir mais plutôt lors du retour de l'arme après le tir. A cette fin, le sens de rotation de la roue libre 4 dans lequel l'élément de liaison 5 et le boulon 6 peuvent tourner est inversé. Comme dans la configuration décrite plus haut, en réponse au recul de l'arme à feu, le corps du tireur exerce une force de réaction dans la direction de la flèche B sur la plaque 2 de l'amortisseur 1 et sur la roue libre 4 de l'organe amortisseur 20. Comme dans cette configuration « inversée » la roue libre 4 permet la rotation de l'élément de liaison 5 et donc du boulon 6 dans le sens qui permet au boulon 6 d'avancer le long du filetage de la vis 7 en direction de la portion 8' du cylindre 8, la vis 7 ne tourne pas en réaction à la force de réaction sur la plaque 2 et l'énergie de recul est emmagasinée complètement dans le ressort 9.

Malgré que toute l'énergie de recul soit provisoirement emmagasinée dans le ressort 9, le retour de l'arme à feu n'intervient pas de manière abrupte et inconfortable pour le tireur. En effet, dans la configuration « inverse », l'action du ressort 9 qui tend à éloigner les parties mobiles 2 et 3 l'une de l'autre engendre la rotation de la vis 7 car la rotation du boulon 6 et de l'élément de liaison 5 est maintenant interdite par la roue libre 4. Comme la vis 7 tourne, l'énergie de recul emmagasinée dans le ressort 9 est transformée en énergie thermique par les disques de frein 11, 12' comme expliqué plus haut et le recul de l'arme à feu se fait de manière contrôlée. Dans cette configuration « inverse », il est particulièrement favorable d'avoir un ressort 9 possédant une constante de raideur importante, permettant ainsi d'emmagasiner toute l'énergie de recul afin que l'amortissement soit maximal.

Il est évident que la présente invention est sujette à de nombreuses variations quant à sa mise en oeuvre. Bien qu'un mode de réalisation non limitatif ait été décrit à titre d'exemple, on comprend bien qu'il n'est pas concevable d'identifier de manière exhaustive toutes les variations possibles. Il est bien sûr envisageable de remplacer un moyen décrit par un moyen équivalent sans sortir du cadre de la présente invention. Toutes ces modifications font partie des connaissances communes d'un homme du métier dans le domaine des amortisseurs d'armes à feu.

## Revendications

1. Organe amortisseur d'énergie de recul (20), par exemple pour amortisseurs pour armes à feu personnelles, comprenant un frein à disques (11, 12'),
**caractérisé en ce que**
l'axe de rotation du frein à disques (11, 12') est essentiellement parallèle à la direction de la force de recul dont l'énergie doit être dissipée.

2. Organe amortisseur d'énergie de recul (20) selon la revendication 1, **caractérisé en ce que** le premier disque de frein (11) est pivotable autour de l'axe de rotation du frein à disque et que le deuxième disque de frein (12') est fixe.

3. Organe amortisseur d'énergie de recul (20) selon la revendication 1, **caractérisé en ce qu'**il comprend un mécanisme d'ajustage du couple de freinage.

4. Organe amortisseur d'énergie de recul (20) selon la revendication 1, **caractérisé en ce que** l'organe amortisseur peut être neutralisé.

5. Organe amortisseur d'énergie de recul (20) selon la revendication 3, **caractérisé en ce que** le mécanisme d'ajustage du couple de freinage comprend un ressort de frein (13) qui tend à appuyer le deuxième disque de frein (12') contre le premier disque de frein (11).

6. Organe amortisseur d'énergie de recul (20) selon la revendication 5, **caractérisé en ce que** le mécanisme d'ajustage du couple de freinage comprend aussi une vis de réglage (14) qui est configurée pour permettre d'ajuster la compression du ressort de frein (13).

7. Organe amortisseur d'énergie de recul (20) selon l'une des revendications précédentes, **caractérisé en ce qu'**il comprend une vis à filetage hélicoïdal (7) et que le premier disque de frein (11) est solidaire de la vis à filetage hélicoïdal (7).

8. Organe amortisseur d'énergie de recul (20) selon l'une des revendications précédentes, **caractérisé en ce qu'**il comprend une roue libre (4) et un boulon (6) arrangé sur la vis à filetage hélicoïdal (7), la roue libre (4) étant configurée pour entrainer en rotation la vis (7) et le disque de frein (11) lors de la dissipation de l'énergie de recul par le frein à disques (11, 12') de l'organe (20).

9. Organe amortisseur d'énergie de recul (20) selon l'une des revendications précédentes, **caractérisé en ce qu'**il comprend un ressort de rappel (9) configuré pour tendre à ramener les éléments de l'organe (20) dans leur position initiale avant le tir.

10. Organe amortisseur d'énergie de recul (20) selon l'une des revendications précédentes, **caractérisé en ce que** les disques de frein (11, 12') sont placés dans un cylindre (8).

11. Organe amortisseur d'énergie de recul (20) selon l'une des revendications précédentes, **caractérisé en ce que** les disques (11, 12') sont fabriqués en acier trempé ou en carbure de tungstène.

12. Amortisseur d'énergie de recul (1) comprenant une première partie mobile (2) et une deuxième partie mobile (3) qui sont configurées pour pouvoir être déplacées en translation l'une par rapport à l'autre selon un axe (A) qui est essentiellement le même que l'axe du canon de l'arme à feu, la première partie mobile (2) étant configurée pour venir en appui sur le corps du tireur et la deuxième partie mobile (3) étant configurée pour être fixée sur la crosse de l'arme à feu,
**caractérisé en ce que**
l'amortisseur d'énergie de recul (1) comprend un organe amortisseur d'énergie de recul (20) selon l'une des revendications précédentes orienté de façon à ce que l'axe de rotation du frein à disque (11,12') de l'organe amortisseur (20) soit essentiellement le même que l'axe de translation des première et deuxième parties mobiles (2, 3).

13. Amortisseur d'énergie de recul (1) selon une des revendications 12, **caractérisé en ce que** l'organe amortisseur d'énergie de recul (20) comprend un ressort de rappel (9) qui est configuré pour tendre à écarter les première et deuxième parties mobiles (2, 3).

14. Arme à feu personnelle **caractérisé en ce qu'**elle comporte un organe amortisseur d'énergie de recul (20) selon une des revendications 1 à 11.
